# EUROPEAN PATENT APPLICATION

(11) **EP 2 790 396 A1**
(43) Date of publication of application: **15.10.2014**
(21) Application number: 14163748.8
(22) Date of filing: 07.04.2014
(51) Int. Cl.: H04N 1/62

(54) **Color extraction-based image processing method, computer-readable storage medium storing the same, and digital image apparatus**

(30) Priority: 08.04.2013 KR 20130038289
(71) Applicant: Samsung Electronics Co., Ltd., Suwon-si, Gyeonggi-do 443-742 (KR)
(72) Inventor: Kim, Su-Kyung, Seoul (KR); Gwak, Jin-pyo, Seoul (KR)
(74) Representative: Waddington, Richard

(57) **Abstract**

An image processing method is disclosed. A color extraction region in an input image is set based on a user's input. Color data included in the color extraction region is extracted. At least one color proposing region is displayed along with the input image. The at least one color proposing region is determined based on the extracted color data and is enabled to be selected by the user. Image processing is performed on a first region of the input image differently from a remaining region of the input image. The first region corresponds to the extracted color data in a selected color proposing region of the at least one color proposing region that is selected by the user.

## Description

### CROSS-REFERENCE TO RELATED PATENT APPLICATIONS

This application claims the priority benefit of Korean Patent Application No. 10-2013-0038289, filed on April 8, 2013, in the Korean Intellectual Property Office, the disclosure of which is incorporated by reference herein in its entirety.

### BACKGROUND

### 1. Field

Various embodiments of the present disclosure relate to a color extraction-based image processing method, a computer-readable storage medium storing the same, and a digital image apparatus.

### 2. Related Art

Digital image processing involves performing processing on a digital image acquired by a scanner, a digital camera, or the like according to a desired purpose. The digital image processing may include image enhancement by converting an original image into an image having higher quality than the original image, and image restoration by restoring an image which is old, or has been modified or damaged during transmission. The digital image processing may also include image recognition by extracting and using a characteristic of the digital image, and new image creation by creating a new image using all or only a portion of the image. In addition, the digital image processing may include image abstraction or compression.

In order to extract and use the characteristic of the digital image, an operation of digitizing attributes of the digital image or extracting a particular region from the digital image is necessary and this operation is called digital image analysis. In order to analyze the digital image, a process of determining a size of the digital image or a size of the particular region and a process of identifying a shape of the digital image are necessary. In addition, operations for determining an outline of the digital image, identifying a hue and a pattern of the digital image, and determining textures of the digital image are to be performed. In this way, there are several methods of analyzing the digital image.

Digital cameras, which have recently been further developed have become widely distributed due to their ease of operation, and thus consumer interest has become focused on methods of using digital image processing techniques. The consumer interest has become increasingly focused on the method of using the digital image process technique as the digital cameras are more widely used in everyday life, and thus more advanced image processing techniques are necessary.

### SUMMARY

According to the present invention there is provided an apparatus and method as set forth in the appended claims. Other features of the invention will be apparent from the dependent claims, and the description which follows.

One or more embodiments of the present disclosure include an image processing method. A color extraction region in an input image is set based on a user's input. Color data included in the color extraction region is extracted. At least one color proposing region is displayed along with the input image. The at least one color proposing region is determined based on the extracted color data and is enabled to be selected by the user. Image processing is performed on a first region of the input image differently from a remaining region of the input image. The first region corresponds to the extracted color data in a selected color proposing region of the at least one color proposing region that is selected by the user.

According to one or more embodiments, the input image may be a preview image.

According to one or more embodiments, the color extraction region may be changed based on the user's input.

According to one or more embodiments, the setting of the color extraction region may be performed a plurality of times.

According to one or more embodiments, a color proposing region of the at least one color proposing region may be a region including a color corresponding to color data within a range similar to the extracted color data.

According to one or more embodiments, a user interface (UI) for selection of a type of image processing by the user may be provided.

According to one or more embodiments, black and white image processing may be performed on the remaining region of the input image.

According to one or more embodiments, mosaic image processing may be performed on the first region that corresponds to the extracted color data.

According to one or more embodiments, blur image processing may be performed on the remaining region of the input image.

One or more embodiments include a digital image processing apparatus including: a color extraction region setting unit that sets a color extraction region in an input image based on a user's input; a color data extraction unit that extracts color data included in the color extraction region; a color proposing unit that displays at least one color proposing region, which is determined based on the extracted color data and is enabled to be selected by the user, along with the input image; and an image processing unit that performs image processing on a first region of the input image differently from a remaining region of the input image. The first region may correspond to the extracted color data in a selected color proposing region of the at least one color proposing region that is selected by the user.

According to one or more embodiments, the input image may be a preview image.

According to one or more embodiments, the color extraction region may be changed based on the user's input.

According to one or more embodiments, the setting of the color extraction region may be performed a plurality of times.

According to one or more embodiments, a color proposing region of the at least one color proposing region may be a region including a color corresponding to color data within a range similar to the extracted color data.

According to one or more embodiments, a user interface for selection of a type of image processing by the user may be provided.

According to one or more embodiments, black and white image processing may be performed on the remaining region of the input image.

According to one or more embodiments, mosaic image processing may be performed on the first region that corresponds to the extracted color data.

According to one or more embodiments, blur image processing may be performed on the remaining region of the input image.

One or more embodiments include a non-transitory computer-readable storage medium that stores computer program codes for performing an image processing method when read and executed by a processor, the image processing method including: setting a color extraction region in an input image based on a user's input; extracting color data including in the color extraction region; displaying at least one color proposing region, which is determined based on the extracted color data and is enabled to be selected by the user, along with the input image; and performing image processing on a first region differently from a remaining region of the input image. The first region may correspond to the extracted color data in a selected color proposing region of the at least one color proposing region that is selected by the user.

According to one or more embodiments, a color proposing region of the at least one color proposing region may be a region including a color corresponding to color data within a range similar to the extracted color data.

Additional embodiments will be set forth in part in the description which follows and, in part, will be apparent from the description, or may be learned by practice of the presented embodiments.

### BRIEF DESCRIPTION OF THE DRAWINGS

These and/or other embodiments will become apparent and more readily appreciated from the following description of the various embodiments, taken in conjunction with the accompanying drawings in which:
FIG. 1 is a block diagram schematically illustrating a digital image processing apparatus performing image processing, according to an embodiment;
FIG. 2 is a flowchart illustrating an image processing method according to an embodiment;
FIGS. 3A, 3B, 3C, and 3D are views illustrating an example in which image processing is performed on an input image according to an embodiment;
FIG. 4 is a flowchart illustrating a method of performing image processing a plurality of times according to an embodiment;
FIGS. 5A, 5B, 5C, and 5D are views illustrating an example in which image processing is performed on an input image a plurality of times, according to an embodiment;
FIG. 6 is a diagram illustrating a color scheme color wheel representing an analogous color range;
FIG. 7 is a diagram illustrating an example of a user interface (UI) capable of being used to select a type of image processing according to another embodiment;
FIGS. 8A and 8B are diagrams illustrating examples of image processing according to another embodiment; and
FIG. 9 is a block diagram schematically illustrating a digital signal processing (DSP) unit in a digital image processing apparatus for performing image processing, according to an embodiment.

### DETAILED DESCRIPTION

Reference will now be made in detail to embodiments, examples of which are illustrated in the accompanying drawings. In this regard, the present embodiments may have different forms and should not be construed as being limited to the descriptions set forth herein. Accordingly, the embodiments are merely described below, by referring to the figures, to explain aspects of the present description. Expressions such as "at least one of," when preceding a list of elements, modify the entire list of elements and do not modify the individual elements of the list.

Various embodiments will be illustrated in drawings and described in detail in the written description. However, this is not intended to limit the invention to particular modes of practice, and it is to be appreciated that all changes, equivalents, and substitutes that do not depart from the spirit and technical scope of the invention are encompassed in the claims. In describing each figure, like reference numerals are used for like elements throughout.

While terms such as "first" and "second," etc., may be used to describe various components, such components are not limited to the above terms. The above terms are used only to distinguish one component from another. The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention as defined by the following claims. Therefore, the scope of the invention is defined not by the detailed description but by the following claims, and all differences within the scope will be construed as being included in the invention.

The terms used in the present application are merely used to describe particular embodiments, and are not intended to limit the invention. An expression used in the singular encompasses the expression of the plural, unless it has a clearly different meaning in the context. In the present application, it is to be understood that terms such as "including" or "having," etc., are intended to indicate the existence of characteristics, numbers, operations, actions, components, parts, or combinations of the embodiments disclosed in the specification, and are not intended to preclude the possibility that one or more other characteristics, numbers, operations, actions, components, parts, or combinations of the embodiments may exist or may be added.

Hereinafter, various embodiments will be described in detail with reference to the accompanying drawings. In the description with reference to the accompanying drawings, the same or corresponding components are denoted by the same reference numerals, and repeated descriptions will be omitted.

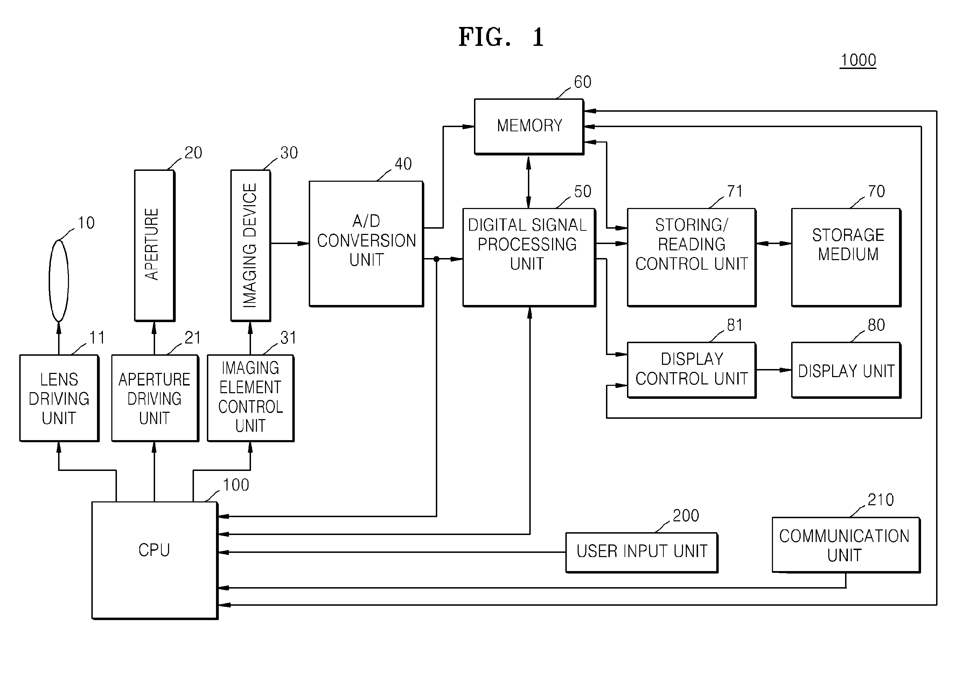

FIG. 1 is a block diagram schematically illustrating a digital image processing apparatus 1000 performing image processing, according to an embodiment.

Overall operation of the digital image processing apparatus 1000 is generally controlled by a central processing unit (CPU) 100. The digital image processing apparatus 1000 includes a user input unit 200 including one or more buttons configured to provide an electric signal when manipulated by a user. The electric signal from the user input unit 200 is transmitted to the CPU 100, and causes the CPU 100 to control the digital image processing apparatus 1000 in response to the electric signal.

In the case of a photographing mode, when the electric signal from the user input unit 200 is applied to the CPU 100, the CPU 100 may use the signal to control a lens driving unit 11, an aperture driving unit 21, and an imaging element control unit 31, thereby respectively controlling a position of a lens 10, an opening degree of an aperture 20, and sensitivity of an imaging element 30. The imaging element 30 generates data related to an image from input light, and an analog/digital (A/D) conversion unit 40 converts analog data output from the imaging element 30 into digital data. The A/D conversion unit 40 may not be necessary to provide digital data, depending on characteristics of the imaging element 30 (e.g., the imaging element 30 may output digital data).

The digital data from the imaging element 30 (or A/D conversion unit 40) may be input to a digital signal processing (DSP) unit 50 via a memory 60, input to the DSP unit 50 without passing through the memory 60, or input to the CPU 100. Here, the memory 60 may include a read only memory (ROM) or a random access memory (RAM). The DSP unit 50 may perform digital signal processing such as gamma correction or white balance adjustment.

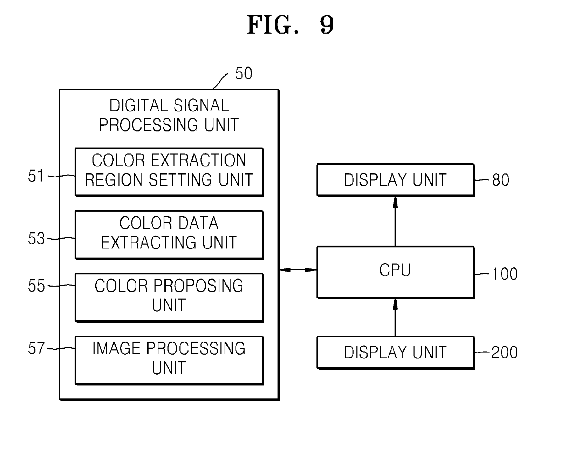

The DSP unit 50 may include a color extraction region setting unit 51 (FIG. 9), a color data extracting unit 53 (FIG. 9), a color proposing unit 55 (FIG. 9), and an image processing unit 57 (FIG. 9).

Image data output from the DSP unit 50 is transmitted to a display control unit 81 via the memory 60 or directly. The display control unit 81 controls a display unit 80 to display an image generated from the transmitted image data on the display unit 80. The image data output from the DSP unit 50 is input to a storing/reading control unit 71 via the memory 60 or directly, and the storing/reading control unit 71 stores the image data in a storage medium 70 in response to a signal from the user or automatically.

The CPU 100 and storing/reading control unit 71 may control the digital image processing apparatus 1000 so that data relating to an image is read from an image file stored in the storage medium 70, the read data is input to the display control unit 81 via the memory 60 or via other paths, and thus, an image of the read data may be displayed on the display unit 80. The storage medium 70 may be mounted in an attachable/detachable manner or permanently mounted onto the digital image processing apparatus 1000. The digital image processing apparatus 1000 may be implemented as a digital photographing apparatus.

As described above, the digital image processing apparatus 1000 generates image data from light which passes through the lens 10 to be incident on the imaging element 30, and stores a digital image file having the image data in the storage medium 70.

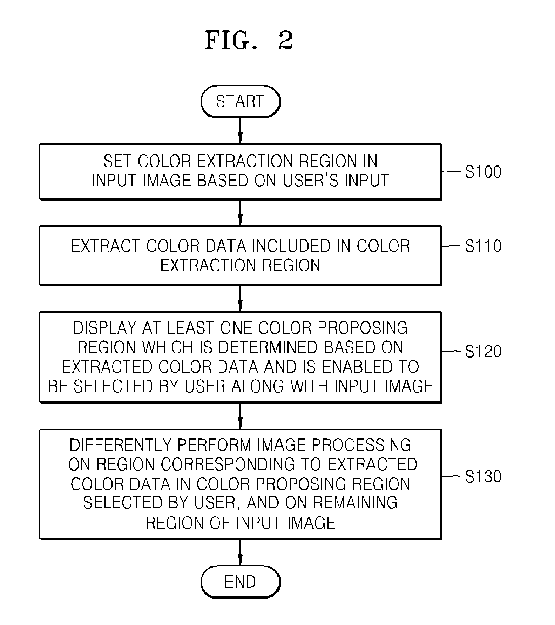

FIG. 2 is a flowchart illustrating an image processing method according to an embodiment.

In operation S100, a color extraction region is set in an input image based on a user's input.

The input image is an image that is displayed on the display unit 80 of the digital image processing apparatus 1000. For example, the input image may be a preview image of an image stored in the storage medium 70. The input image may be manually input by a user, or input from a web server over a network.

The input image includes color data of each pixel. For an RGB color model, the color data includes data about gradation values of a red (R) color, a green (G) color, and a blue (B) color of each pixel.

The color extraction region may be directly designated as a core of the input image (e.g., a central portion selected by default) or designated based on the user's input.

According to the present embodiment, the following description assumes that a touch input through the display unit 80 of the user input unit 200 is selected, for example, using a predetermined size of a quadrangle or other shape. In addition, the color extraction region may be set by designating a subject in the input image on which the user wants to perform image processing.

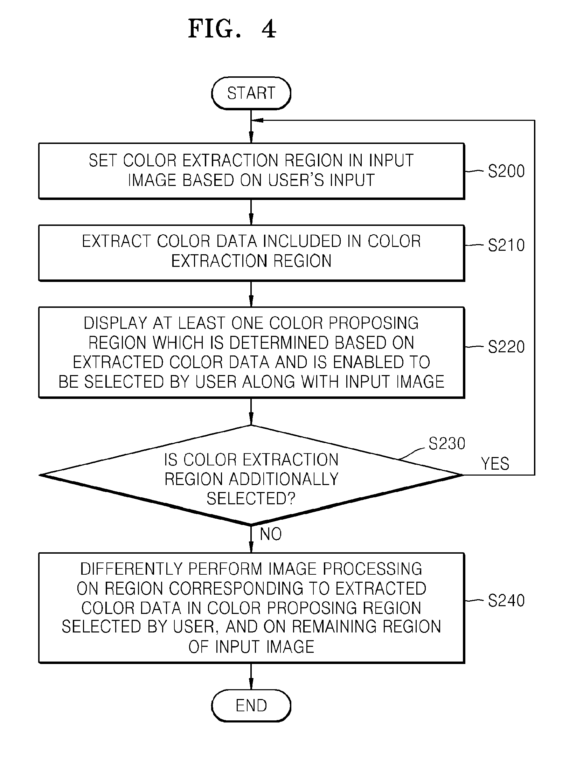

An operation of setting the color extraction region may be performed a plurality of times. This will be described in detail with reference to FIG. 4.

In operation S110, the color data included in the color extraction region is extracted.

A desired color may be displayed on the display unit 80 by appropriately combining three primary colors. Here, a color model is used to standardize representation of color.

More specifically, in a coordinate system of the color model, each of the three primary colors forms one axis, and one particular color indicates one point in this coordinate system.

There are various kinds of such coordinate systems, depending on their applications.

For example, an RGB (red/green/blue) model is a model used in a color cathode-ray tube (CRT) monitor or computer graphic field, YIQ (luminance/in-phase/quadrature) is a color model for television (TV) broadcasting, and CMY (cyan/magenta/yellow) is a color model used in a printer in order to output a color image. A system which is an intuitive model similar to a model in which a human perceives color and handles hue, saturation, and brightness uses a HIS (hue/intensity/saturation) color model.

In the present embodiment, the RGB model may be used. For example, the input image includes color data of each pixel. The color data includes data on gradation values of a red (R) color, a green (G) color, and a blue (B) color of each pixel. However, embodiments of the invention are not limited to the above-mentioned color models.

In operation S120, at least one color proposing region, which is determined based on the extracted color data and is enabled to be selected by the user, is displayed along with the input image.

The color proposing region may be a region which includes color data extracted from the color extraction region. For example, the color proposing region may be a region which includes colors corresponding to all color data extracted from a color extraction region set in an input image.

However, since a color of a subject which the user perceives in the input image may be different from a color of the subject which is displayed by the display unit 80 of the digital image processing apparatus 1000, all colors of the subject of the input image which the user wants to emphasize may not be included.

In order to solve the above-mentioned problem, according to the present embodiment, the color proposing region may be a region which includes a region corresponding to color data within a region similar to the extracted color data. Therefore, a region which includes a color corresponding to color data within the similar region, as well as a region which includes a color corresponding to color data extracted from the color extraction region may be displayed as the color proposing region.

For example, the color proposing region which includes the color corresponding to the color data within the similar region is presented, thereby enabling the user to easily perform high performance color extraction-based image processing which may satisfactorily emphasize a subject on which the user wants to perform the image processing.

In addition, the color proposing region may be moved to another position of an input screen. This is to prevent the color proposing region from interfering with visibility of the input image.

In operation S130, the image processing is differently performed on a first region of the input image corresponding to the extracted color data in the color proposing region selected by the user, and on a remaining region of the input image. Thus, the image processing is performed on the first region differently from the remaining region.

Image processing involves processing an input image acquired by the digital image processing apparatus 1000 according to a desired purpose. The image processing may perform image enhancement by converting an original image into an image having higher quality than the original image, or perform image restoration by restoring an image which is old, or which has been modified or damaged during transmission. The image processing may involve image recognition by extracting and using a characteristic of the digital image, or new image creation by creating a new image by using all or only a portion of the image. In addition, the image processing may perform image abstraction or compression.

According to the present embodiment, the image processing is performed on the first region corresponding to the extracted color data in the color proposing region selected by the user differently from image processing performed on the remaining region of the input image, and thus, a subject of the input image which is set as the color extraction region may be emphasized with high performance. A subject itself including various colors may be emphasized, and a subject which occupies a small portion of the input image may also be emphasized. In addition, when the subject, which the user wants to emphasize, appears with subjects having a similar color, it is possible to emphasize only the desired subject.

For example, black and white image processing may be performed on the remaining region of the input image. For this reason, even though color emphasis processing is not performed, there is an effect in that a subject designated as the color extraction region is emphasized.

Furthermore, mosaic image processing may be performed on a region corresponding to the extracted color data.

In addition, blur image processing may be performed on the remaining region of the input image.

According to another embodiment, a user interface which may be used to select a type of image processing may be provided.

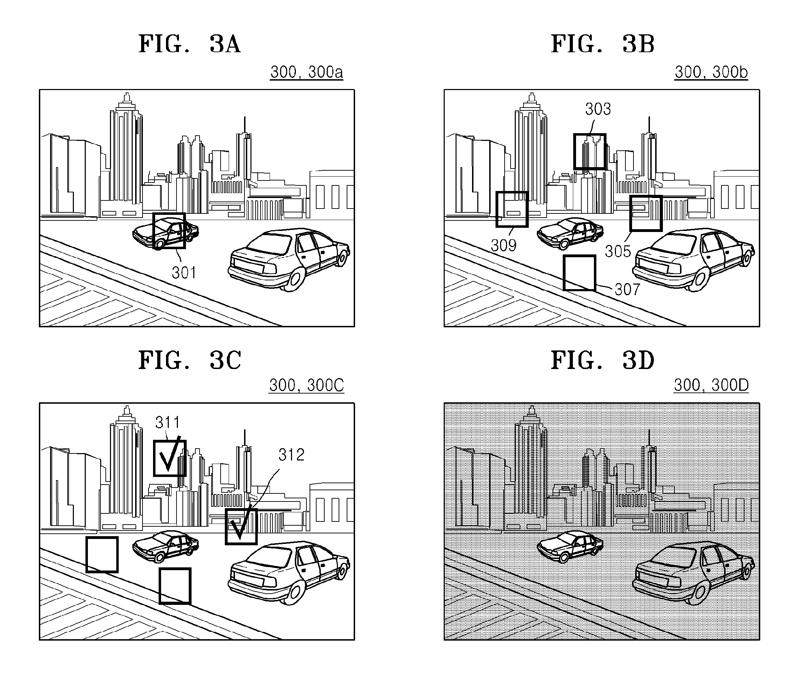

FIGS. 3A, 3B, 3C, and 3D are views illustrating an example in which image processing is performed on an input image according to an embodiment.

For example, FIG. 3A is a view 300a illustrating an example in which a color extraction region 301 is set in an input image 300 displayed on a display unit 80 of a digital image processing apparatus 1000 in operation S100 of FIG. 2.

The color extraction region 301 may be set based on a subject which a user wants to emphasize in the input image. In the view 300a, the color extraction region 301 may be set based on a vehicle located at a center of the input image.

Color data included in the color extraction region 301 may be extracted by the DSP unit 50. For example, when a subject on which the color extraction region 301 is set is the vehicle, color data which includes black corresponding to a wheel of the vehicle, red corresponding to an outer appearance of the vehicle, yellow corresponding to a headlamp of the vehicle, and sky blue corresponding to a window of the vehicle may be extracted.

The color extraction region 301 may be changed based on a user's input. For example, the color extraction region 301 may be set so as to include a building that appears in the input image 300, and the color extraction region 301 may be again set based on a relatively bigger vehicle at a right side of the input image 300a. In this way, when the color extraction region 301 is modified, color data extracted by the DSP unit 50 may be modified.

FIG. 3B is a view 300b illustrating an example in which at least one of color proposing regions 303, 305, 307, and 309, which is enabled to be selected by the user in operation S120 of FIG. 2, is displayed along with the input image 300, based on the color data extracted from the color extraction region 301 in operation S110 of FIG. 2.

The color proposing regions 303, 305, 307, and 309 are determined based on the color data extracted from the color extraction region 301. The color proposing region 303, 305, 307, or 309 may be a region which includes a color corresponding to the color data included in the color extraction region 301, and may be a region which includes a color corresponding to the color data within the range similar to the extracted color data.

At least one of the color proposing regions 303, 305, 307, and 309 may be displayed along with the input image 300 in the view 300b.

For example, when a subject on which the color extraction region 301 is set is a vehicle, color data which includes black corresponding to a wheel of the vehicle, red corresponding to an outer appearance of the vehicle, yellow corresponding to a headlamp of the vehicle, and sky blue corresponding to a window of the vehicle may be extracted. Therefore, the color proposing regions 303, 305, 307, and 309 may be regions including color data of black, red, yellow, and sky blue, respectively.

For example, when color data extracted from the color extraction region 301 is color data of yellow and blue, a region which includes green yellow included in a range similar to yellow and includes purple included in a range similar to blue may also be the color proposing region.

FIG. 3C is a view 300c illustrating an example in which a region corresponding to color data, which a user wants to emphasize, is selected from at least one of the color proposing regions 303, 305, 307, and 309 based on a user's input. For example, a black region 311 corresponding to the color proposing region 303 and a red region 312 corresponding to the color proposing region 305 may be selected from the color proposing region 303, 305, 307, and 309 and displayed along with the input image 300.

FIG. 3D is a view 300d illustrating an example in which image processing is performed on a first region corresponding to the extracted color data in the color proposing region selected in FIG. 3C differently from image processing performed on a remaining region of the input image 300, and operation S130 of FIG. 2 may be described in relation thereto.

For example, image processing may be differently performed on a region which corresponds to black of the reference numeral 303 and red of the reference numeral 305, and a remaining region of the input image 300.

For example, black and white image processing may be performed on the remaining region of the input image. Thus, even though color emphasis processing is not performed, there is an effect in that only a subject designated as the color extraction region 301 is emphasized.

FIG. 4 is a flowchart illustrating a method of performing image processing a plurality of times according to an embodiment.

In operation S200, a color extraction region is set in an input image based on a user's input. This is analogous to the operation S100 of FIG. 2.

In operation S210, color data included in the color extraction region is extracted. This is analogous to the operation S110 of FIG. 2.

In operation S220, at least one color proposing region which is determined based on the extracted color data and is enabled to be selected by the user is displayed along with the input image. This is analogous to the operation S120 of FIG. 2.

In operation S230, it is determined whether the color extraction region is additionally selected based on the user's input. Until the user is satisfied, setting of the color extraction region may be repeated. Therefore, the user sets a color extraction region for a plurality of subjects in the input image a plurality of times, and thus, image processing for enhancing the plurality of subjects may be easily performed without using a computer.

In operation S240, image processing is performed on a first region corresponding to the extracted color data in the color proposing region selected by the user differently from image processing performed on the remaining region of the input image. This is analogous to the operation S130 of FIG. 2.

However, the order of operations S230 and S240 may be switched. For example, after the setting of the color extraction region is performed a plurality of times, the image processing may be performed at once, and each image processing may be performed every time each color extraction region is set.

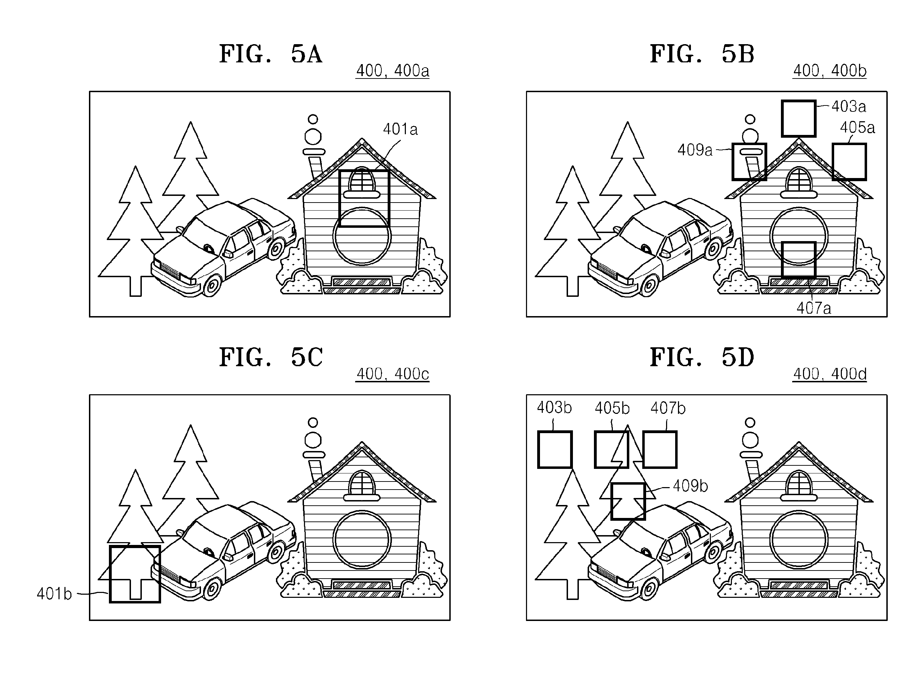

FIGS. 5A, 5B, 5C, and 5D are views illustrating an example in which image processing is performed on an input image a plurality of times, according to an embodiment.

FIG. 5A is a view 400a in which a color extraction region 401 a is set based on a house in order to emphasize the house as a subject in an input image 400, and FIG. 5B is a view 400b in which color proposing regions 403a, 405a, 407a, and 409a are displayed along with the input image 400 based on the color extraction region 401a.

Furthermore, FIG. 5C is a view 400c in which a color extraction region 401 b is set based on a tree in order to emphasize the tree as a subject in the input image 400, and FIG. 5D is a view 400d in which color proposing region 403b, 405b, 407b, and 409b are displayed along with the input image 400 based on the color extraction region 401 b.

Image processing is performed on a first region corresponding to color data extracted from a color proposing region of the color proposing regions, which is selected based on a user's input, differently from image processing performed on a remaining region of the input image 400, and thus, there is an effect whereby the regions corresponding to the house and the tree may be emphasized in the input image. For example, black and white image processing may be performed on a remaining region other than the house region and the tree region in the input image. In addition, mosaic image processing may be performed on the regions corresponding to the house and the tree in the input image.

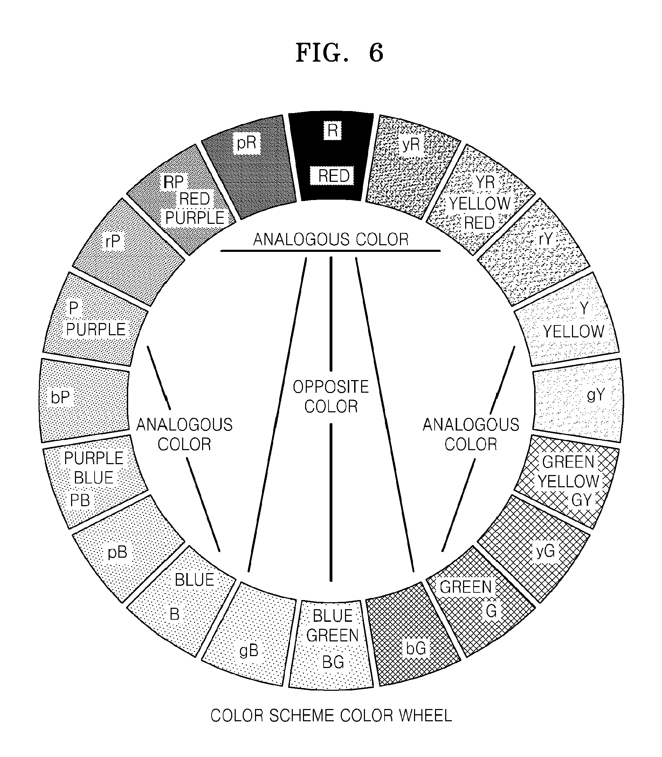

FIG. 6 is a diagram illustrating a color scheme color wheel representing an analogous color range.

In general, the color scheme color wheel is a chart representing analogous colors and opposite colors of 20 color schemes. In the chart, analogous colors refer to a color scheme in which groups of colors are adjacent to each other on the color wheel, i.e., the colors are analogous. For example, analogous colors may be a color scheme such as red purple/red/yellow red and purple/blue/purple blue. These colors may instill a friendly and pleasant feeling, and feelings of good-natured cooperativeness and kindness may also be felt. The analogous color scheme may also be harmonized through a change in brightness or saturation, similarly to the same hue. Typically, an analogous color scheme is usually used in a color scheme having a dominant color. However, when the difference in color is too small, a disharmonious color scheme may be provided.

Colors grouped as analogous colors in the color scheme color wheel may be considered to be colors within a similar range according to an embodiment.

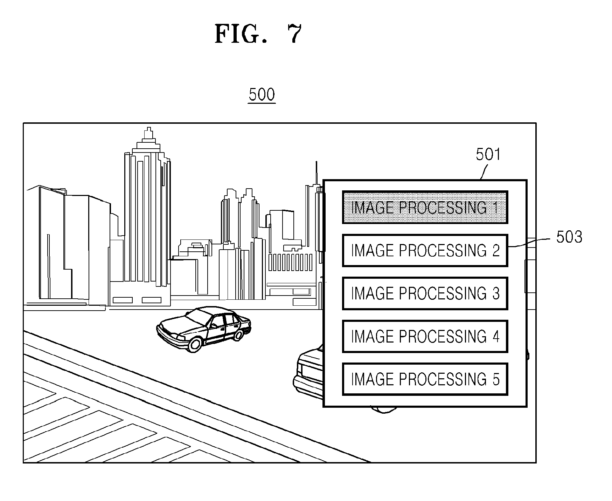

FIG. 7 is a diagram illustrating an example of a user interface (UI) 500 capable of being used to select a type of image processing method 503 according to another embodiment.

A digital image processing method is a particular method for implementing a digital image processing technique, and may be classified into point processing methods, area processing methods, geometrical processing methods, or frame processing methods.

A pixel that is a basic unit of a digital image is seen as a very small point, and thus is referred to as a pixel point. A method which changes a pixel value based on an original value or position of the pixel point is called point processing. An arithmetic operation in which a predetermined constant is added to or subtracted from a pixel value, and a logical operation in which true and false are determined are representative point processing methods. In addition, various methods such as a method of changing a pixel value by using a histogram or intensity transformation may be used.

In this way, in the point processing method, one pixel value is changed using a pixel value or a position. On the other hand, in the area processing method, a pixel value is changed based on an original pixel value and a pixel value of one or more adjacent pixels. In this case, a plurality of pixels are associated with each other, and thus, one new pixel value is generated. Blurring, in which details of a digital image are removed to blur the digital image, and sharpening, in which details in a digital image are further emphasized to provide a contrast effect, are representative area processing methods.

In addition, edge detection, which detects edges of an object in a digital image, and median filtering, which finds a median of neighboring pixels to generate a new pixel value, may also be performed.

Geometric processing is a method of changing positions of digital image pixels or an array that is a group of pixels. Representative geometric processing methods include scale processing which reduces or enlarges a size of a digital image.

An operation of rotating a digital image or performing translation by moving the digital image to another place is an example of a geometric processing method. The geometric processing may be effectively performed using methods such as reverse mapping and interpolation.

Frame processing refers to a process of performing a combination of various operations on two or more different digital images to generate a new pixel value. Each pixel of an image generated by the frame processing is positioned in the same place as in the input image. A representative frame processing method is an arithmetic operation performing addition or subtraction between the digital images and a logical operation performing AND or OR operations.

In addition, an averaging operation which acquires an average by adding and averaging pixel values of each digital image is an example of a frame processing method.

The image processing methods 503 displayed on the UI 500 according to an embodiment may include the black and white image processing, the mosaic image processing, or the blur image processing.

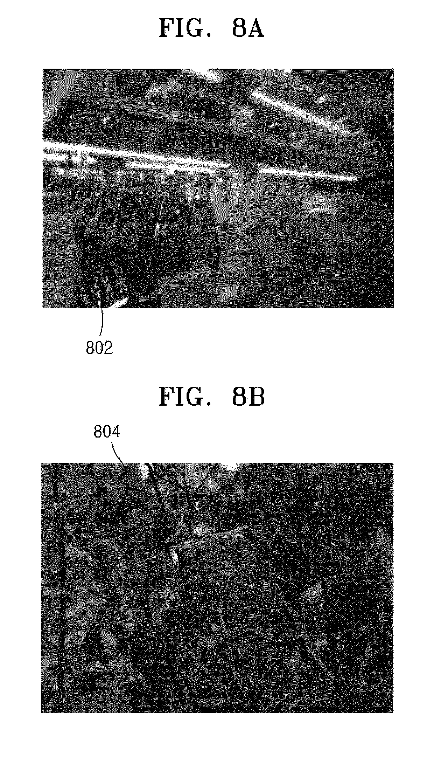

FIGS. 8A and 8B are diagrams illustrating examples of image processing according to another embodiment.

FIG. 8A is a diagram illustrating an example in which, when a user sets a color extraction region in an input image based on a first region including green bottles 802 within the input image, and blur image processing is performed on a remaining region other than the green bottles 802, which has an effect of emphasizing the green bottles 802.

FIG. 8B is a diagram illustrating an example in which, when a user sets a color extraction region in an input image based on a first region including red petals 804 of roses in the input image, and mosaic image processing is performed on regions corresponding to the red petals 804, which has an effect of emphasizing the red petals 804.

FIG. 9 is a block diagram schematically illustrating a DSP unit 50 in a digital image processing apparatus 1000 for performing image processing, according to an embodiment.

The DSP unit 50 includes a color extraction region setting unit 51, a color data extracting unit 53, a color proposing unit 55, and an image processing unit 57.

The color extraction region setting unit 51 may set a color extraction region in an input image based on a user's input.

The input image refers to an image displayed on a display unit 80 of the digital image processing apparatus 1000. For example, the input image may be a preview image, or an image stored in a storage medium 70. The input image may be manually input by a user, or may be input from a web server over a network.

The color extraction region may be set by designating a subject on which a user wants to perform image processing in an input image. The color extraction region may be directly designated as a core of an input image or changed based on a user's input. In addition, a plurality of color extraction regions may be set based on the user's input.

The color data extracting unit 53 may extract color data included in the color extraction region.

The input image includes color data of each pixel. For an RGB color model, the color data includes data on gradation values of a red (R) color, a green (G) color, and a blue (B) color of each pixel. In the present embodiment, the RGB model may be used. However, the embodiments of the present disclosure are not limited to the above-mentioned models.

The color proposing unit 55 may display at least one color proposing region which is determined based on the extracted color data and is enabled to be selected by the user along with the input image.

The color proposing region may be a region including color data extracted from the color extraction region. The color proposing region may be a region including a color corresponding to color data within a range similar to the extracted color data.

In the image processing unit 57, image processing may be performed on a first region corresponding to the extracted color data in the color proposing region selected by the user differently from image processing performed on a remaining region of the input image.

For example, black and white image processing may be performed on the remaining region of the input image. Therefore, even though color emphasis processing is not performed, there is an effect in that a subject designated as the color extraction region is emphasized.

Furthermore, mosaic image processing may be performed on a first region corresponding to the extracted color data. Blur image processing may be performed on a remaining region of the input image.

In a user input unit 200, a user generates input data for controlling an operation of the digital image processing apparatus 1000. The user input unit 200 may include one or more of a key pad, a dome switch, a touch pad (e.g., a capacitive overlay type, a resistive overlay type, an infrared beam type, a surface acoustic wave type, an integral strain gauge type, or a piezo electric type), a jog wheel, or a jog switch. In particular, when the touch pad is formed with the display unit 80 in a mutual-layered structure, the touch pad may be called a touch screen. According to the present embodiment, the color extraction region may be set in the input image through the user input unit 200, and a color which the user wants to emphasize may be selected in a color proposing region presented based on the set color extraction region.

The display unit 80 may include at least one of a liquid crystal display (LCD), a thin film transistor liquid crystal display (TFT-LCD), an organic light emitting diode (OLED) display, a flexible display, or a three-dimensional (3D) display.

When the touch screen is formed by the display unit 80 and the touch pad in a mutual-layered structure, the display unit 80 may be used as an input apparatus in addition to an output apparatus. The touch screen may be configured to detect touch input pressure as well as a touch input position and a touched area. The touch screen may be configured to detect a proximity touch as well as a real-touch.

A memory 60 may store a program for processing and controlling by a DSP unit 50, and perform a function for temporary storage of input/output data (for example, a phone book, a still image, or a moving image).

The memory 60 may include at least one type of storage medium of a flash memory type, a hard disk type, a multimedia card micro type, a card-type memory (for example, SD memory or XD memory), a RAM, a static random access memory (SRAM), a ROM, an electrically erasable programmable read only memory (EEPROM), a programmable read only memory (PROM), a magnetic memory, a magnetic disk, and an optical disk. The digital image processing apparatus 1000 may operate a web storage which operates a storage function of the memory 60 on the Internet.

A CPU 100 may control the overall operation of the digital image processing apparatus 1000. For example, controlling and processing related to digital image processing may be performed.

As described above, according to one or more of the above embodiments, a color extraction region is set in an input image based on a user's input, and a color proposing region is presented, and thus, high performance subject-based color extraction is enabled. As such, there is an effect in that the user may easily perform image processing on a desired subject.

Furthermore, according to another embodiment, a user interface capable of being used to select a type of image processing is provided, and thus, there is an effect in that the user may easily and quickly perform desired high performance image processing.

An apparatus according to an embodiment may include a user interface apparatus such as a processor, a memory storing and executing program data, and a permanent storage unit such as a disk drive, a touch panel, a key, and a button.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The apparatus described herein may comprise a processor, a memory for storing program data to be executed by the processor, a permanent storage such as a disk drive, a communications port for handling communications with external devices, and user interface devices, including a display, touch panel, keys, buttons, etc. When software modules are involved, these software modules may be stored as program instructions or computer readable code executable by the processor on a non-transitory computer-readable media such as magnetic storage media (e.g., magnetic tapes, hard disks, floppy disks), optical recording media (e.g., CD-ROMs, Digital Versatile Discs (DVDs), etc.), and solid state memory (e.g., random-access memory (RAM), read-only memory (ROM), static random-access memory (SRAM), electrically erasable programmable read-only memory (EEPROM), flash memory, thumb drives, etc.). The computer readable recording media may also be distributed over network coupled computer systems so that the computer readable code is stored and executed in a distributed fashion. This computer readable recording media may be read by the computer, stored in the memory, and executed by the processor.

Also, using the disclosure herein, programmers of ordinary skill in the art to which the invention pertains may easily implement functional programs, codes, and code segments for making and using the invention.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements, the invention may be implemented with any programming or scripting language such as C, C++, JAVA®, assembler, or the like, with the various algorithms being implemented with any combination of data structures, objects, processes, routines or other programming elements. Functional aspects may be implemented in algorithms that execute on one or more processors. Furthermore, the invention may employ any number of conventional techniques for electronics configuration, signal processing and/or control, data processing and the like. Finally, the steps of all methods described herein may be performed in any suitable order unless otherwise indicated herein or otherwise clearly contradicted by context.

For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The words "mechanism", "element", "unit", "structure", "means", and "construction" are used broadly and are not limited to mechanical or physical embodiments, but may include software routines in conjunction with processors, etc.

The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention as defined by the following claims. Therefore, the scope of the invention is defined not by the detailed description of the invention but by the following claims, and all differences within the scope will be construed as being included in the invention.

No item or component is essential to the practice of the invention unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing method comprising:
setting a color extraction region in an input image based on a user's input;
extracting color data included in the color extraction region;
displaying at least one color proposing region, which is determined based on the extracted color data and is enabled to be selected by the user, along with the input image; and
performing image processing on a first region of the input image differently from a remaining region of the input image, wherein the first region corresponds to the extracted color data in a selected color proposing region of the at least one color proposing region that is selected by the user.

2. The method of claim 1, wherein the input image comprises a preview image.

3. The method of claim 1, wherein the color extraction region is changed based on the user's input.

4. The method of claim 1, wherein the setting of the color extraction region is performed a plurality of times.

5. The method of claim 1, wherein a color proposing region of the at least one color proposing region comprises a region including a color corresponding to color data within a range similar to the extracted color data.

6. The method of claim 1, further comprising:
providing a user interface (UI) for selection of a type of image processing by the user.

7. The method of claim 1, wherein black and white image processing is performed on the remaining region of the input image.

8. The method of claim 1, wherein mosaic image processing is performed on the first region that corresponds to the extracted color data.

9. The method of claim 1, wherein blur image processing is performed on the remaining region of the input image.

10. A digital image processing apparatus comprising:
a color extraction region setting unit that sets a color extraction region in an input image based on a user's input;
a color data extraction unit that extracts color data included in the color extraction region;
a color proposing unit that displays at least one color proposing region, which is determined based on the extracted color data and is enabled to be selected by the user, along with the input image; and
an image processing unit that performs image processing on a first region of the input image differently from a remaining region of the input image, wherein the first region corresponds to the extracted color data in a selected color proposing region of the at least one color proposing region that is selected by the user.

11. The apparatus of claim 10, wherein the input image comprises a preview image.

12. The apparatus of claim 10, wherein black and white image processing is performed on the remaining region of the input image.

13. The apparatus of claim 10, wherein mosaic image processing is performed on the first region that corresponds to the extracted color data.

14. The apparatus of claim 10, wherein blur image processing is performed on the remaining region of the input image.

15. A non-transitory computer-readable storage medium that stores computer program codes for performing an image processing method when read and executed by a processor, the image processing method comprising:
setting a color extraction region in an input image based on a user's input;
extracting color data including in the color extraction region;
displaying at least one color proposing region, which is determined based on the extracted color data and is enabled to be selected by the user, along with the input image; and
performing image processing on a first region of the input image differently from a remaining region of the input image, wherein the first region corresponds to the extracted color data in a selected color proposing region of the at least one color proposing region that is selected by the user.
